(19) Europäisches Patentamt

European Patent Office

Office européen des brevets

(11) **EP 4 745 536 A1**

(12) **EUROPEAN PATENT APPLICATION**

(43) Date of publication:
**20.05.2026 Bulletin 2026/21**

(21) Application number: **24290040.5**

(22) Date of filing: **13.11.2024**

(51) International Patent Classification (IPC):
**G01F 23/296** (2022.01)   **G01F 23/80** (2022.01)
**B64D 37/02** (2006.01)   **B64D 37/30** (2006.01)

(52) Cooperative Patent Classification (CPC):
**G01F 23/2966; B64D 37/005; B64D 37/02;
B64D 37/30; G01F 23/296; G01F 23/80;
G01F 23/804**

(84) Designated Contracting States:
**AL AT BE BG CH CY CZ DE DK EE ES FI FR GB
GR HR HU IE IS IT LI LT LU LV MC ME MK MT NL
NO PL PT RO RS SE SI SK SM TR**
Designated Extension States:
**BA**
Designated Validation States:
**GE KH MA MD TN**

(71) Applicants:
• **AIRBUS Operations GmbH
21129 Hamburg (DE)**
• **Airbus (S.A.S.)
31700 Blagnac (FR)**

(72) Inventors:
• **Schramm, Gerrit
31700 Blagnac (FR)**

• **Meyerhoff, Thomas
31700 Blagnac (FR)**
• **Geisler, Helge
21129 Hamburg (DE)**
• **Zoghaib, Lionel
31700 Blagnac (FR)**

(74) Representative: **LKGLOBAL
Partnerschaftsgesellschaft mbB
Brienner Straße 11
80333 München (DE)**

Remarks:
Amended claims in accordance with Rule 137(2)
EPC.

(54) **FILLING LEVEL MONITORING DEVICE FOR MONITORING THE FILLING LEVEL OF A FLUID CONTAINER, HYDROGEN TANK, AND AIRCRAFT COMPRISING SUCH HYDROGEN TANK**

(57)    A filling level monitoring device (100) for monitoring a filling level (210) of a fluid container (200) is provided that includes an exciting element (10), a sensing element (21), a signal source (30), a suspension element (70) with a defined stiffness, and a processing unit (40). The exciting element (10) is configured to mount on the fluid container (200) or suspension element (70) to activate a specific suspension mode (25) of vibration. The suspension element (70) attaches rigidly to the fluid container (200) so that both vibrate together. The sensing element (21) detects these vibrations and sends data to the processing unit (40). The signal source (30) generates a multi-frequency input signal (31) for the exciting element (10). The processing unit (40) uses the vibration data to identify the suspension mode (25), determine its modal frequency (80), and calculate the fluid container's (200) current filling level (210) based on this frequency.

Fig. 1

EP 4 745 536 A1

**Description**

TECHNICAL FIELD

The present disclosure relates to filling level monitoring devices for fluid tanks and, in particular, to hydrogen tanks for aircraft applications having such a monitoring device.

TECHNICAL BACKGROUND

In light of increasing environmental protection efforts, alternative propulsion sources for aircrafts are developed. Such alternative propulsion sources may use alternative fuels other than kerosene fuel, such as liquid hydrogen, which cannot be stored in regular fuel tanks. Hydrogen fuel or other liquid gas fuels therefore need to be stored in suitable tanks, which must, e.g., withstand the necessary internal pressure and low temperature (20K) to store the gas in a liquid state. However, for safety reasons, it is also necessary to monitor the filling level of the fuel tanks accurately at any time. Currently, filling levels of fluid tanks can, for example, be determined by measuring the weight of the tank or indirectly by monitoring the flow out of the tank. However, these methods are either not very accurate or may not be suitable to be used in aircraft applications. For example, soft suspensions (such as those found in weighing scales) cannot be easily introduced in moving vehicles. An aircraft may, for example, experience changes in altitude and during such ascend or descent flight segments of the aircraft, the gravity vector may not be constant with regard to the fuel tank, leading to difficulties in determining an accurate weight value and therefore filling level. The same applies for curved flight segments in which the aircraft changes its flight vector.

Further, sensing solutions such as those used for Kerosene sensing implemented today in wings of aircraft cannot be used for hydrogen tanks for safety reasons (electronic instruments and hydrogen should be separated) and insulation (leakage) reasons.

Overall, there is a need to develop a non-intrusive sensing system for cryogenic tanks, in particular in aircraft applications. Today, a very limited set of technical options is available for this purpose. The interpretation of vibration-based measurements is one of these solutions.

Methods for determining the filling level of fluid tanks by monitoring resonance frequencies of the fluid tanks are in principle known in the art. A general approach regarding such monitoring has been described in the patent application WO 2023 / 217 807 A1 (briefly described below) of the applicant, which illustrates a concept and gauging principles. However, such methods in some cases may have problems to determine and track/monitor stable vibrational modes.

WO 2023 / 217 807 A1 describes a filling level monitoring device for liquid tanks, such as hydrogen tanks, a hydrogen tank comprising such a filling level monitoring device and an aircraft comprising such a hydrogen tank. The filling level monitoring device uses a signal source and exciting elements to couple vibrational loads having a multitude of frequency components into a container. Resonance frequencies of the container are depending on the filling level of the container. Sensing elements measure vibrations in the container after the exciting elements coupled the vibrational loads into the container. A processing unit performs spectral analyses of the input signal from the signal source and of vibration signals from the sensing elements and compares the spectral functions of the input signal and the vibration signal(s) to extract resonance frequencies. The resonance frequencies of the container are further depending on the spatial orientation of the container. A filling level indicator unit calculates a current filling level of the container from the extracted resonance frequencies and a spatial orientation signal from a spatial orientation sensor by correlating the collected data with reference data.

DESCRIPTION

It is an objective to provide accurate and stable monitoring of fuel levels of fluid tanks in aircraft applications.

This objective is solved by the subject matter of the independent claims. Further embodiments are described in the dependent claims as well as in the following description.

According to a first aspect, a filling level monitoring device for monitoring the filling level of a fluid container is provided. The filling level monitoring device comprises at least one exciting element, at least one sensing element, a signal source, at least one suspension element having a suspension stiffness, and a processing unit. The at least one exciting element is configured to be mounted to the fluid container and/or the at least one suspension element such that it is operable to excite at least one suspension mode of vibration. The suspension mode is a distinct mode of vibration of the at least one suspension element. The at least one suspension element is configured to be fixedly connected to the fluid container such that, when excited by the at least one exciting element, the fluid container and the at least one suspension element together vibrate in unison. The at least one sensing element is configured to be mounted to the fluid container and/or the at least one suspension element and to sense vibrations corresponding to the at least one suspension mode. The signal source is connected to the at least one exciting element and is configured to generate an input signal comprising a multitude of frequency components. Each of the at least one sensing element is connected to the processing unit and is configured to sense vibrations within the fluid container and to generate and send a corresponding vibration signal to the processing unit. The processing unit is configured to identify the at least one suspension mode from the vibration signals of the at least one sensing element and the input signal, to determine a modal frequency of the at least one suspension mode, and to determine a current filling level of the fluid container based on the modal frequency of the at least one suspension mode.

Such a filling level monitoring device may be used for any fluid container for liquid, such as for gas bottles or containers for hydrogen. However, the filling level monitoring device is not limited to hydrogen containers. It may, for example, also be used with containers for liquified petroleum gas (LPG), methane gas, or any other fluid that is stored under pressure in a liquified form. Further, the filling level monitoring device may also be used for regular liquid tanks. In general, as used herein, the term fluid covers liquids (such as pressurized gasses in liquid form), mixtures of liquids and gases, i.e., fillings of the container where a filling of the container is present in both phase states (liquid and gas) simultaneously, as well as pure gases. The fluid container may, for example, be a dewar tank. However, this is only one non-limiting example.

In general, as any other tangible structure, under force-based excitation, a fluid container for storing a fluid exhibits a characteristic vibration or oscillation pattern, where the amplitudes of the oscillations or vibrations in specific frequency ranges show a relative maximum. While some of these so-called resonance frequencies depend only on the structure of the container itself and are independent of the filling of the container, others can be clearly assigned to the stored contents. In particular, a liquified gas filling such as liquid hydrogen changes specific resonance frequencies of the container, where the change in frequency is proportional or at least clearly associated to the filling level, i.e., to the change of the mass and/or volume of the filling, of the fluid container. These resonances shift in frequency when the filling level changes and can therefore be used to infer the filling level of the fluid container.

Further, in any spring-mass system, resonance frequencies are functions of the stiffness of the spring (or in general of a resilient or spring-like element), and the mass attached to the spring. The present invention utilizes this fact by providing suspension elements (at least one suspension element; when discussing "suspension elements" herein, this means "at least one suspension element") having a defined stiffness which are fixedly attached to the fluid container and which act as mounts of the fluid container to connect the fluid container to a surrounding structure such as an aircraft fuselage. The fluid container and the suspension elements together build a spring mass system which exhibits certain modes of resonance which are called suspension modes herein. In general, depending on the configuration, such a suspension element may comprise multiple degrees of freedom (up to six, three translational degrees of freedom and three rotational degrees of freedom) which each comprises its own resonance frequency. However, for the purposes of determining the filling level, optionally, movement/oscillation of the system comprising the fluid container and the suspension elements (herein also called "container/suspension system") may be restricted to one or a subset of these possible degrees of freedom, for example by means of a corresponding restriction element. The resonance frequencies of the suspension modes are functions of the mass of the fluid container and can therefore be used to infer the filling level of the fluid container by means of its mass. Since the suspension elements are fixedly connected to the fluid container, the suspension elements and the fluid container together vibrate in unison when excited, wherein the vibration frequency is determined by the suspension elements and their stiffnesses.

The inventors found that the suspension modes also are highly sensitive to the filling level within the fluid container, such that its modal frequency drifts in a predictable way with changing filling levels. Further, it can be easily measured from the outside of the fluid container by attaching corresponding vibration sensors (i.e., the at least one sensing element). If multiple sensing elements are used, some redundancy of the measurement can be implemented by the individual measurements of the sensing elements or the sensing elements can be used together to determine the suspension mode(s), e.g., by averaging the individual measurements. This, and the predictability of the modal frequency drifts, on the one hand greatly increases the signal to noise ratio of the measurement of the filling level, and, on the other hand, is highly predictable.

By monitoring the resonance frequencies of the suspension modes, the filling level of the container may therefore be determined. Because of their natural dependence on the mass of the fluid container, the suspension modes are particularly suitable for accurately measuring the filling level of the fluid container without regard to the orientation of the fluid container. The suspension modes refer to vibration/oscillation modes in which the fluid container and the mounts (i.e, the suspension elements) together oscillate in sync. In other words, because in the mounted state the fluid container is fixedly connected to the suspension elements, the fluid container and the suspension elements oscillate together in the same way.

In general, a vibration-based determination of the filling level offers a very attractive alternative to conventional methods. Higher frequency domain displacements in particular can be both small and still visible with vibration sensors (i.e., the sensing elements). The stiffness of the suspension elements therefore is selected to be high enough (and their strength is considerably increased), to shift the related suspension modes (at least one of which is observed by the filling level monitoring device) toward the higher frequency range. The response magnitude caused by any load, for instance a landing or a maneuver, is significantly reduced (orders of magnitude) by this. The same holds for the overall level of stress.

The fluid container may, for example, be the component of a tank that is actually holding the (fluid) content of the tank, such as a pressure tight gas bottle or other suitable structures, or may be the whole tank itself. The fluid container may, in a non-limiting example, be a dewar tank. However, because the suspension modes are independent of the configuration of the fluid tank itself, the filling level monitoring device can also be used with any other fluid container.

The suspension elements can, for example, be springs, correspondingly formed beams, or any other suitable suspension element that allows oscillations/vibrations in at least one degree of freedom. The suspension elements are at least partially elastic and, together with the current mass of the fluid container, comprise distinct resonance frequencies. Any source of nonlinearity within the suspension elements is to be avoided as far as possible, to improve repeatability, by avoiding any friction, for example by using metal materials for the suspension elements. Although other alternatives are conceivable, too, welded parts or tightly assembled components are recommended. Elastomer materials, for example, should be avoided since they are both highly non-linear (because of their hyper-elastic behavior) and very sensitive to the operating environment (temperature, humidity, ...). Further, adding damping to the suspension elements to avoid large resonances should be avoided since most dissipative mechanisms tend to alter the linear behavior of the suspension. It is more important to make sure that the suspension element exhibit a rather high modal frequency to reduce large displacement resonances.

The signal source, or rather an output terminal of the signal source, is connected to the at least one exciting element and generates electrical signals, i.e., the input signals for the exciting elements, having a predefined signal pattern. In particular, the signal source generates electrical signals that cover a multitude of different frequencies in the range of the respective resonance (i.e., modal) frequencies that respond with a frequency change at any possible filling level of the container. Hence, the electrical signals in particular cover all the modal frequencies the at least one suspension mode may exhibit at any conceivable filling level of the fluid container. As described above, the suspension modes are highly visible from the outside and their modal frequency are highly correlated with the filling level of the fluid container. Therefore, for each filling level of the fluid container, each suspension mode has a specific modal frequency. The signal source may, for example, output a signal having an evenly distributed spectral distribution, such as a white noise signal. However, other signal shapes covering the respective frequencies are possible, too. For example, such a white noise signal may be limited to the modal frequency range of the suspension modes that can occur for all the possible filling levels, e.g., by using a corresponding window function on the signal.

The at least one exciting element may be any element or device suitable for mechanically exciting the container, i.e., to bring the container to vibrate or oscillate. In particular, the exciting element may either be directly attached to the container or may be attached to the suspension element and may be configured to vibrate in response to an electrical signal applied to the exciting element. The exciting elements are, in particular, configured (in particular arranged and oriented) such that the desired suspension modes are excited. The exciting element can, for example, be a shaker, impact hammer, piezoelectric element, or any other device that introduces vibrating/oscillating movements into the container/suspension system. However, the exciting element does not necessarily need to be attached directly to the container or the suspension elements and may alternatively, for example, also be a loudspeaker or similar device that emits acoustic waves. In such configurations, the emitting direction of the speaker may be directed towards the container at the desired location of the container, so that the emitted acoustic waves coupled into the container mechanically excite the container/suspension system, in particular at least one of the suspension modes. Also, instead of additional exciting elements, in aircraft or vehicles, aircraft (or vehicle) noise originating from turbines, pumps, etc. may also be directly coupled into the container / suspension elements and therefore act as exciting element. Preferably, although not so limited, the at least one exciting element is co-located with one of the sensing elements, such that specifically at least one of the suspension modes is excited. Since the at least one exciting element is connected to the output terminal of the signal source, the electrical signal output by the signal source (the input signal for the exciting elements) is converted into respective mechanical vibrations or oscillations which are coupled into the container/suspension system by the at least one exciting element. As will be readily apparent to one of ordinary skill in the art, frequency components of the input signal which correspond to resonance frequencies of the container (i.e., in particular to the current modal frequency of at least one of the suspension modes), or rather of the system of the container (with its filling) and the suspension elements, at a given time show a relative amplitude maximum of the oscillations or vibrations of the container while other frequency components do not.

The at least one sensing element (herein also collectively "sensing elements") may be any sensing or sensor element which is suitable to detect vibrations or oscillation of the container/suspension system and to generate respective electrical signals, in particular signals comprising frequency components of the oscillation or vibration pattern of the container/suspension system. For example, the sensing elements may be accelerometers or laser vibrometers. These signals are input into a processing unit.

The processing unit may be any computerized device capable of analyzing electrical signals, in particular by performing a spectral or modal analysis. The processing unit may, for example, be a general-purpose computer having a CPU and memory components, which is well known in the art. The processing unit may also be any other microcomputer device, such as an ASIC or FPGA or TPU device. The processing unit receives the output signals, i.e., the vibration signals, from the sensing element(s) and performs joint data analysis algorithms on these vibration signals together with the input signal of the signal source for computing/determining the at least one suspension mode from the vibration signals received from the sensing element(s) and for determining a current filling level of the fluid container based on the current modal frequency of the determined suspension mode(s) (for example by correlating the determined modal frequency with reference suspension mode frequencies, as described further below).

For example, as described further below in more detail with regard to certain embodiments, the processing unit may determine a transfer function (e.g., a Frequency Response Function (FRF)) between the vibration signal of the sensing element(s) and the input signal, in order to identify and determine the modal frequencies of the suspension mode(s). The current filling level may then be determined based on the current modal frequency (or frequencies) of the determined suspension mode(s). However, these are only examples for a corresponding data analysis algorithm for identifying the suspension mode and for determining its modal frequency. Other suitable algorithms may also be conceivable. As long as the suspension mode(s) and their current modal frequency can be determined, the filling level of the fluid container can then easily be determined by correlating the current modal frequency with reference data (since the modal frequency of the suspension mode(s) is highly visible (even under dynamic conditions) and is highly correlated with the filling level of the fluid container.

Although pressure and/or temperature do at least not have a very significant effect on the suspension mode(s), they may, in principle, at least have a limited effect. Therefore, to increase accuracy even further, optionally, the temperature of the fluid container may be taken into account when determining the filling level. The temperature of the container may be accounted for by being included into corresponding reference suspension mode frequency data or machine learning algorithms, as described below. The filling level monitoring system therefore may further include corresponding temperature sensors.

According to an embodiment, the processing unit is further configured to identify the at least one suspension mode and to determine the modal frequency of the at least one suspension mode by determining a transfer function in the frequency domain for the vibration signals of each of the at least one sensing element by: normalizing and transforming each of the vibration signals of the at least one sensing element and the input signal to a frequency domain representation using Fast Fourier Transforms (FFTs), and comparing the FFT of each of the vibration signal of the at least one sensing element with the FFT of the input signal to determine the corresponding transfer function.

The processing unit receives and analyzes the input signal from the signal source at any instance in time, to compute the frequency components included in the input signal. However, instead of directly using the input signal, a sensor signal from corresponding feedback sensors at the at least one exciting element may also be used. The processing unit further receives and analyzes the vibration signals of each of the sensing elements. In general, the input signal and the vibration signals are time series data.

The frequency components (i.e., the frequency domain representation) of the input signal and the vibration signals may therefore, for example, be determined by performing any spectral analysis algorithm (such as, in this embodiment, Fast Fourier Transforms (FFTs)) on the corresponding data, thereby creating corresponding spectral functions indicating the signal components over the frequency (i.e., the corresponding signals (input signal and vibration signals) in the frequency domain).

These spectral functions of the vibration signals and the input signal may then be used to determine a corresponding transfer functions (also referred to as Frequency Response Functions (FRF)) for each of the vibration signals with respect to the input signal. Such a frequency response function is defined as

$$H_i(f) = \frac{V_i(f)}{E(f)}$$

where $H_i(f)$ is the corresponding transfer function. These transfer functions indicate the amplification or attenuation of the amplitude of certain frequency components over frequency $f$. $V_i(f)$ is the corresponding measurement signal in the frequency domain (i.e., the vibration signal of the corresponding sensing element in the frequency domain, for example a corresponding FFT of the corresponding signal) and $E(f)$ is the input signal (or excitation signal) in the frequency domain (e.g., an FFT of the input signal). The index i refers to the corresponding sensing element, i.e., $H_1(f)$ is a first transfer function and $V_1(f)$ is the vibration signal of a first sensing element in the frequency domain; $H_2(f)$ is a second transfer function and $V_2(f)$ is a vibration signal of the second sensing element in the frequency domain. Hence, the functions $V_i(f)$ and $E(f)$ correspond to spectral functions of the vibration signals and the input signal, such as those obtained by an FFT or other spectral analysis of the corresponding signals, and the transfer functions indicate how certain frequencies of the vibration signals deviate from the input signal and therefore show their attenuation or amplification. The computation of FFTs itself is well known in the art and will not be described in detail herein. The corresponding FFTs (spectral functions) can then be used to determine the corresponding transfer functions, as described above. Although described as using fast Fourier transforms (FFTs) as spectral analysis procedure for transforming the corresponding time series data into the frequency domain, it should be appreciated that any other spectral analysis algorithm may be used, too.

As described above, the suspension modes are resonance modes of the suspension element(s). Hence, when the container/suspension system is excited with these frequencies, oscillations of the system at these frequencies are amplified and therefore show clear local maxima in the transfer function(s). These local maxima can be identified, and their frequency can be determined by the processing unit by utilizing any suitable spectral analysis algorithm, as will be readily apparent. Identifying the location of the local maxima can, e.g., be done by standard data analysis procedures and can, for example, be further refined by additional signal processing techniques such as spline interpolation. This enables to determine the current modal frequency of the corresponding suspension mode.

If more than one sensing element is used, a corresponding transfer function may be determined for each of the sensing elements individually and the modal frequencies of the suspension modes can be determined from each such transfer function. The individual results may then, in a non-limiting example, be averaged or may be used for redundancy. Also, in another non-limiting example, a weighted average function can be used, to assign, e.g., measurement values detected by sensing elements arranged directly at one of the suspension elements a higher weight. Also, if more than one suspension mode is obtained/examined, the modal frequency of each of these suspension modes can be determined individually.

By obtaining the current modal frequency of at least one of the suspensions modes from the transfer functions and correlating it with reference data, the current filling level of the fluid container can be determined by the processing unit. Further, if more than one suspension mode is examined, such a correlation (and hence a filling level) can be determined for each of the suspension modes and the results can again be used either redundantly (for example for consistency checks) or may be averaged.

Although the processing unit is described as an independent unit, it should be appreciated that the processing unit may also be part of a superordinate system, such as a flight computer in a cockpit of an aircraft or other vehicle or in a remote location, such as a ground station. Further, the processing unit may comprise multiple independent units carrying out different steps of the overall procedure. Additionally, the processing unit or a superordinate system comprising the processing unit can include display components that output the current filling level in the sense of a fuel gauge after determining the current filling level of the fluid container, or the processing unit may output a corresponding filling level signal which may, for example, be passed to an onboard-computer (such as a flight computer) or other control and monitoring system. Any conceivable such combination is covered by the term "processing unit".

According to another embodiment, the processing unit is configured to determine the at least one suspension mode independently for each of the at least one sensing element by determining a frequency of a corresponding maximum peak of the corresponding transfer function.

This can add redundancy to the determination and may also allow to account for minor deviations (for example because of the flight dynamics) by averaging the individual results.

According to another embodiment, the processing unit is configured to determine the current filling level of the fluid container by correlating the modal frequency of each of the determined suspension modes with reference suspension mode frequencies corresponding to specific filling levels.

As already described further above, the suspension mode(s) is/are highly sensitive and stable to the filling level of the fluid container and drift in a predictable manner. Therefore, reference suspension mode frequencies can be determined beforehand (optionally for each of the suspension modes, if more than one mode is examined), for example in a laboratory environment or during a calibration procedure. In such a procedure, the fluid container may, for example, first be completely filled and then emptied in a controlled way while tracking the measured modal frequency of the suspension mode(s) for different filling levels and keeping these modal frequencies as reference data. However, the reference data may also be determined in another suitable way, such as by computer modelling of machine learning and artificial intelligence methods. Further, it is also conceivable to store multidimensional reference data (for example one dimension for each of the sensing elements, if more than one sensing element is used), i.e., a "map" of reference frequencies for each of the sensing elements with regard to the corresponding filling levels.

Correlating the frequency of the determined suspension mode(s) may then be done simply by comparing the determined current modal frequency (or frequencies) of the suspension mode(s) with the reference data in order to determine the current filling level of the fluid container. However, correlating may also be done via machine learning and artificial intelligence algorithms.

According to another embodiment, the processing unit is configured to determine the current filling level by averaging current filling levels determined independently for individual ones of the sensing elements.

According to another embodiment, the at least one exciting element is configured to be co-located with at least one of the sensing elements.

In particular, the corresponding exciting element and the corresponding sensing element can be located at the same location of the container/suspension system, preferably (although not so limited) at one of the at least one suspension element. If the exciting element has a defined direction of action and the sensing element has a defined direction of detection, the exciting element and the sensing element may be oriented such that the direction of action of the exciting element corresponds to a desired suspension mode direction and such that the direction of action corresponds to the direction of detection. This configuration allows a targeted excitation of the desired suspension mode and further increases the signal to noise ration because the sensing element directly picks up exactly the targeted suspension mode.

According to another embodiment, the at least one suspension element is made from a metallic material, and/or the suspension stiffness of the at least one suspension element, expressed in terms of a Young's modulus, is in the range between 2 GPa to 420 GPa.

Preferably, the suspension stiffness is in the range between 20 GPa to 350 GPa, more preferably between 40 GPa to 280 GPa, and most preferred between 60 GPa to 220 GPa.

As already described further above, non-linear materials such as elastomer materials as well as damping of the suspension elements are to be avoided for various reasons (hyper-elastic behavior, alteration of linear behavior). Metals have proven to be particularly suitable. The stiffness of a material can, for example, be related to a Young's modulus. It is however an intricate quantity which depends on both the materials stiffness (Young's modulus for isotropic materials such as most metals) and the geometrical design. For example, aluminum materials having a stiffness (in terms of the Young's modulus) of, e.g, 70 GPa, titanium materials having a stiffness of, e.g., 120 GPa, or steel materials having a stiffness of, e.g., 210 GPa, are suitable. However, these are only non-limiting examples. However, the stiffness can, for example, also be described in terms of a displacement $u$ caused by a force $F$ acting on the material, i.e, $k = F/u$, where k is the stiffness. For example, a range for such a stiffness k expressed in terms of the displacement caused by the force can, in a non-limiting example, be in the range of a 10 N/m to $10^7$ N/m. In particular, a frequency of the suspension modes may, in a non-limiting example, be in the range of approximately 50 Hz to 100 Hz and the frequency depends on the mass of the fluid container. However, all these ranges are only exemplary, and the actual stiffness of the suspension elements has to be determined taking into account all the system considerations and constraints.

Further, the suspension elements still have to be designed with care to find a good tradeoff between softness and stiffness. In particular, if the suspension (i.e., the suspension elements) is too soft, the displacement and stress are too high. On the other hand, if the suspension ist too stiff, the mounts vibration (i.e., the suspension modes) are pushed toward the high frequency range and become less visible among a wide set of tank modes. The suspension mode has thus to be located in an intermediate frequency range. Unlike in standard motion-free suspensions, the suspension itself can be considered as a mount since it will be mechanically well connected to the object to weigh. This will result in a strong dynamic coupling where object and mounts cannot be separated: they vibrate as a whole.

The above ranges of the stiffness have proven to be a good tradeoff between softness and stiffness.

According to another embodiment, the at least one suspension mode comprises at least one of the following modes associated with corresponding degrees of freedom: a translational vibration mode, and a rotational vibration mode.

Translational vibration modes correspond to modes in which the fluid container oscillates such that it is displaced linearly with regard to a certain extension direction of the fluid container. Such modes can, for example, include lateral modes, in which the container oscillates in a lateral direction (for example, if the fluid container is a dewar tank, this would correspond to linear displacements perpendicular to the longitudinal extension of the fluid container), longitudinal modes, in which the fluid container is displaced (i.e. oscillates) along its longitudinal extension, and vertical modes, in which the fluid container oscillates linearly along the vertical direction. For example, if the fluid container is mounted, via the suspension elements (which also act as mounts), to the floor of an aircraft interior, the vertical direction would be the direction perpendicular to the floor.

Rotational vibration modes correspond to any rotational movement/displacement (i.e., rotational oscillation) of the fluid container with regard to the suspension elements along at least one of its main axes (rotations along axes other than the main axes can be described by linear combinations of rotations along the main axes).

Each of these degrees of freedom may have a distinct pattern of mode frequencies for individual masses of the fluid container (i.e., filling levels).

According to another embodiment, the at least one suspension element is configured to connect the fluid container to a surrounding structure.

In other words, the suspension element(s) simultaneously act(s) as a mount(s) to connect the fluid container to a surrounding structure, such as an aircraft fuselage or interior components within the aircraft fuselage (e.g., a floor panel).

According to another embodiment, the at least one suspension element is a spring, and/or the filling level monitoring device further comprises a restriction element that restricts vibrational movement of the fluid container and the at least one suspension element to specified degrees of freedom.

In some cases, to fully constrain the motion along one direction, standard prismatic joints or sliders may be used as restriction elements. For instance, if springs are set vertically, it may be desirable to avoid any horizontal motion in order to get a clear frequency response of the corresponding suspension mode. However, other restriction elements may be used, too. Further, such restriction elements may be used with other types of suspension elements (i.e., with suspension elements other than springs).

According to another embodiment, the at least one suspension element is a metal frame that can vibrate in at least one of a vertical direction, a longitudinal direction, and a lateral direction.

Such a metal frame may, for example, be an arch-like metal beam than can be attached (for example welded) to the fluid container. The stiffness of the metal frame can, for example, be defined by a beam thickness of the metal frame (which may be formed by a beam structure). The metal frame can be shaped such that it allows vibrations/oscillations (in particular by corresponding temporary deformations of the metal frame) in the desired degrees of freedom. For example, if the metal frame is formed to support the fluid container by providing a symmetrical holding force from the lateral sides and where the metal beams of the metal frame mainly experience bending, the metal frame may restrict movement in the lateral direction but allows oscillations in the longitudinal and vertical direction. On the other hand, if the metal beams of the metal frame extend substantially vertical between the fluid container and the surrounding structure, the metal frame may allow motion longitudinally, laterally and vertically. By carefully designing the metal frame, the desired degrees of freedom and with it the available suspension modes can be implemented. Appropriate shapes may, for example, be designed by using simulations, physical models, a generative AI algorithm, or in any other suitable way. Examples of possible shapes will become clearer further below with regard to the figures.

Such a metal frame can also be used to mount the fluid container in a hanging configuration, as opposed to a standing configuration.

According to another embodiment, the at least one exciting element is arranged at and in contact with the at least one suspension element and is configured to couple vibrational loads corresponding to the input signal from the signal source into the at least one suspension element and the fluid container.

In this configuration, the exciting element(s) directly couple the vibrational movements into the suspension elements itself, leading to direct excitation of the suspension mode(s).

According to another embodiment, the filling level monitoring device further comprises at least one end stop to limit motion of the fluid container.

In very rare occasions such as in emergency conditions such as a crash, etc. it may be beneficial to have a failsafe system. End stops are common and can be made of elastomer or foam (to get a progressive behaviour). Such end stops limit movement of the fluid container under extreme load conditions and increase security.

According to a second aspect, a hydrogen tank is provided, comprising a fluid container for holding liquified hydrogen, and a filling level monitoring device according to any one of the embodiment described herein.

The filling level monitoring device may be embodied according to any one of the embodiments described above and is configured to monitor the filling level of the fluid container of the hydrogen tank according to the principles described above.

According to a third aspect, an aircraft is provided. The aircraft comprises an aircraft fuselage, and a hydrogen tank according to any one of the embodiment described herein. The filling level monitoring device is configured to monitor the hydrogen filling level of the fluid container.

Such an aircraft may use hydrogen as an alternative fuel, i.e., an aircraft turbine may be driven using hydrogen as an energy source. The hydrogen may be used as a primary energy source, e.g., by burning the hydrogen directly within the turbine, or as a secondary energy source, e.g., by producing electrical energy with a hydrogen fuel cell and powering the turbine by means of the electrical energy created in this way.

The filling level monitoring device according to the present disclosure enables accurate monitoring of the filling level of the hydrogen tank under any flight conditions. In particular, the filling level monitoring device may constantly monitor the filling level during flight and report corresponding filling levels to the pilot. The fluid container of the hydrogen tank may, for example, be positioned within the fuselage such that a longitudinal axis of the container coincides with a longitudinal axis of the fuselage. However, the hydrogen tank may also be positioned within the fuselage in any other suitable way.

In summary, the present disclosure provides an accurate monitoring system to keep track of the filling level of a fluid container, such as a liquid hydrogen tank. Because of the changing flight conditions in an aircraft (and the cryogenic nature of LiH2), conventional filling level monitoring means, such as by measuring the fluid flow out of the tank or by determining the weight of the tank, are inherently inaccurate. These inaccuracies can be avoided by measuring the filling level of a fluid container by monitoring filling level dependent resonance frequencies of the tank, in particular by monitoring the modal frequency of the suspension mode, which is highly sensitive to the filling level, predictable, and highly insensitive to external influences. Therefore, the present disclosure enables a more accurate and non-intrusive monitoring of the filling level of fluid containers in general, and, in particular, in aircraft applications, thereby increasing security of aircrafts using alternative fuels such as hydrogen.

Although the present disclosure mainly is described with regard to aircraft applications, it should be noted that the disclosure may be used for any suitable application, such as for automotive and similar applications.

BRIEF DESCRIPTION OF THE DRAWINGS

In the following, exemplary embodiments are described in more detail having regard to the attached figures. The illustrations are schematic and not to scale. Identical reference signs refer to identical or similar elements. The "figures show:

**Fig. 1**    a schematic overview of a hydrogen tank having a filling level monitoring device for a fluid container of the hydrogen tank, comprising a spring as a suspension element.

**Fig. 2**    an exemplary configuration of suspension elements in the form of springs that can be used in the filling level monitoring system of Fig. 1.

**Fig. 3**    another exemplary configuration of suspension element in the form of metal frames that prevent lateral movement that can be used in the filling level monitoring system of Fig. 1.

**Fig. 4**    another exemplary configuration of suspension element in the form of metal frames that also allow lateral movement that can be used in the filling level monitoring system of Fig. 1.

**Fig. 5**    exemplary transfer functions (frequency response functions) for a sensing element mounted on the fluid container for different stiffnesses, wherein the transfer functions are each determined for two specific filling levels of a fluid container, namely an empty state and a completely filled state.

**Fig. 6**    transfer functions obtained with metal frames as suspension elements, such as the metal frames of Figs. 3 and 4, in an empty state and a completely filled state of a fluid container, using a first (low) stiffness of the metal frame.

**Fig. 7**    transfer functions obtained with metal frames as suspension elements, such as the metal frames of Figs. 3 and 4, in an empty state and a completely filled state of a fluid container, using a second (middle) stiffness of the metal frame.

**Fig. 8**    transfer functions obtained with metal frames as suspension elements, such as the metal frames of Figs. 3 and 4, in an empty state and a completely filled state of a fluid container, using a third (high) stiffness of the metal frame.

**Fig. 9**    a schematic view of an aircraft comprising a hydrogen tank with a filling level monitoring device.

DETAILED DESCRIPTION

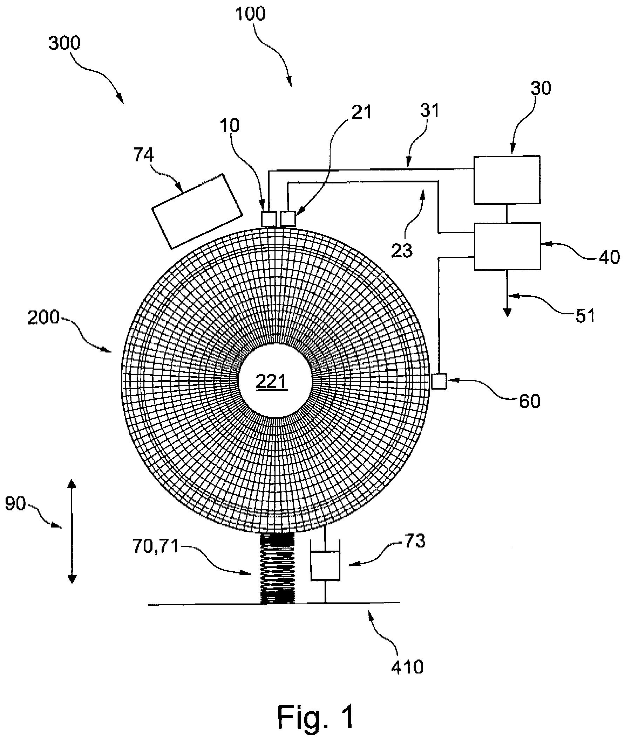

Fig. 1 schematically shows an exemplary liquid hydrogen tank 300. The hydrogen tank 300 comprises a fluid container 200 and a filling level monitoring device 100. The fluid container 200, in the depicted configuration, is embodied as a cylindrical dewar tank, which is shown in a top view of one of its end faces or tips. Further, in the depicted configuration, the filling level monitoring device 100 comprises one exciting element 10, and one sensing element 21, however, it should be appreciated that more than one exciting element 10 and more than one sensing element 21 can be provided. Further, the filling level monitoring device 100 comprises a signal source 30, a processing unit 40, and an optional spatial orientation and acceleration sensor 60 and/or an optional temperature and/or pressure sensor 60 (both indicated by the same reference sign, which may also refer to a common sensor unit comprising all of these sensors). The exciting element 10 is electrically connected to the signal source 30. Further, the signal source 30 is electrically connected to the processing unit 40, the sensing elements 21, 22 are electrically connected to the processing unit 40, and the optional spatial orientation and acceleration sensor 60 (and/or the optional temperature and/or pressure sensor 60) is electrically connected to the processing unit 40.

The fluid container 200 holds a liquid hydrogen filling (not explicitly shown). The fluid container 200 is a pressure tight gas vessel configured to hold a pressurized liquified hydrogen gas. In the depicted configuration, the fluid container 200 is a cylindrical dewar tank 200 that comprises a first tip 221 and a second tip (not explicitly shown). The first tip 221 and the second tip are arranged opposite to each other and are distanced from each other in a length direction of the fluid container 200. The sensing element 21 is co-located with the exciting element 10 at a top of the fluid container 200. However, it should be appreciated that the exciting element 10 and the sensing element 21 can be arranged at different locations and that both of these elements 10, 21 do not necessarily have to be arranged at the top of the fluid container 200. The exciting element 10 only needs to be able to excite at least one suspension mode, as described herein, and the sensing element 21 on needs to be able to sense motions/vibrations/oscillations of the fluid container 200 and at least one suspension element 70 (herein also collectively referred to "container/suspension system"), so that the suspension modes can be observed.

The suspension element 70 also acts as a mount 70 to interconnect the fluid container 200 to a surrounding structure 410, such as an aircraft fuselage 410 or a component within an aircraft fuselage 410, such as a floor panel. In the depicted configuration, the suspension element 70 is a spring 71 and is fixedly connected (for example welded) to the fluid container 200 and is attached to the surrounding structure 410. A restriction element 73 (which may, for example, be a slider or a prismatic joint, restricts movement of the fluid container 200 and the suspension element 70 in one direction (or degree of freedom), in particular in the vertical direction. In general, without such a restriction element 73, the suspension element 70 and the fluid container 200 can move in up to six degrees of freedom (3 translational degrees of freedom and 3 rotational degrees of freedom).

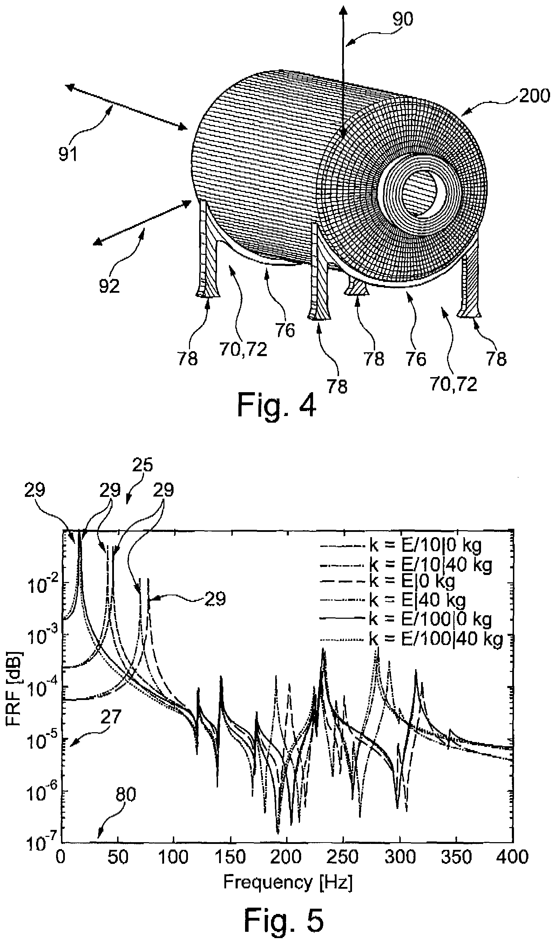

As described above, the signal source 30 may be any signal source generating electrical signals covering a multitude of frequency components. The frequency range of the signal source 30 in particular spans possible modal frequencies 80 (not depicted in Fig. 1, see Figs. 5 to 8) of the fluid container 200 at different filling levels. This frequency span may, for example, be determined by computer simulations of the structural dynamics of the container/suspension system. It may also be determined beforehand in a laboratory environment, as will be readily apparent. Multiple possibilities have been described herein further above and will not be repeated here. In the depicted configuration, the signal source 30 is a gaussian white noise signal source 30 generating a wide range of frequency components which are equally distributed.

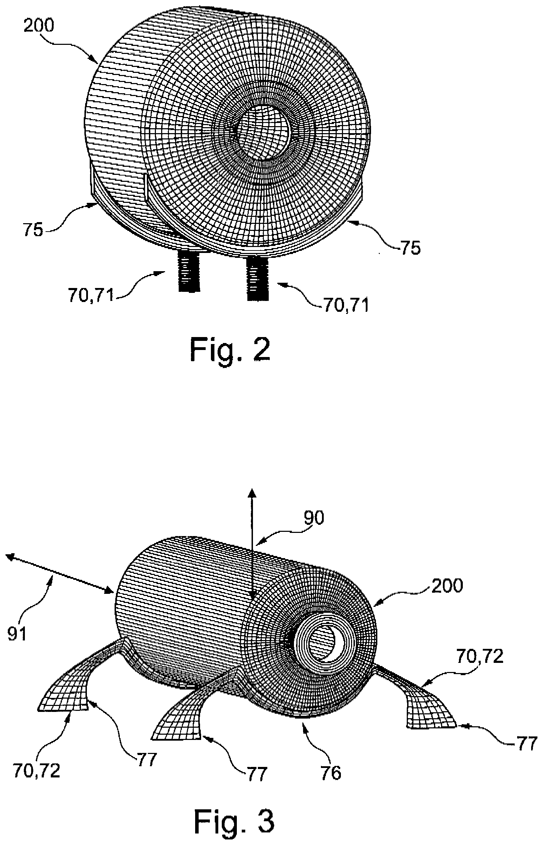

The container 200 together with the suspension element 70 has various resonance frequencies, some of which are only correlated to the structural dynamics of the container 200 itself, while others are dependent on the filling level. In particular, some of the resonance frequencies are proportional or otherwise correlated in a defined way to the filling level of the fluid container 200 and shift when the filling level changes. In particular the suspension modes 25 (see Fig. 5), as defined herein further above, are highly sensitive to the filling level of the fuel container 200 and highly insensitive for external factors, making it ideal for monitoring the filling level of the fluid container 200. The fluid container 200 and the suspension element 70 together build a spring/mass system, having a resonance frequency that depends on the mass of the fluid container 200 (and therefore on the filling level) and on the stiffness of the suspension element 70. Hence, the modal frequencies 80 of the suspension modes 25 shift, when the filling level changes. Therefore, by determining the current modal frequency 80 (see Fig. 3) of at least one suspension mode 25 (in the configuration of Fig. 1 in particular of the vertical suspension mode), the current filling level of the fluid container 200 may be accurately determined.

The gaussian white noise signal source 30 is configured to generate corresponding electrical signals or input signals 31 for the exciting element 10 (it should be appreciated that, although in the depicted configuration only one exciting element 10 is used, also multiple exciting elements 10 and/or multiple sensing elements 22 may be used, as described herein further above). The exciting element 10 may be any element or device capable of generating mechanical oscillations or vibrations. In the depicted configuration, for example, the exciting element 10 is a shaker or impact hammer that introduces vertical movements (i.e., oscillations) into the container/suspension system. The exciting element 10 is directly attached to the fluid container 200 and generates vibrations/oscillations which correspond to the input signal 31 from the signal source 30 which are coupled into the fluid container 200 and the suspension element 70. However, the exciting element(s) 10 may also be any other device capable of coupling mechanical vibrations into the container/suspension system and may, in particular, not necessarily be directly attached to the container 200. For example, the exciting elements may also be an acoustic wave source directed at the fluid container 200 at the desired location. However, these are only examples and in principle any other exciting element 10 may be used.

Oscillations or vibrations from the exciting elements 10 corresponding to resonance frequencies of the fluid container 200 (in particular corresponding to the current modal frequency 80 of the suspension mode(s) 25 defined by the design of the suspension element(s) 70) for the current filling level 210 at the moment of the measurement are amplified within the container/suspension system and create corresponding oscillations of the fluid container 200 and the suspension element 70, while other frequency components are not amplified.

The sensing element(s) 21, in turn, are configured to pick up or measure these oscillatory movements of the container 200 and generate corresponding vibration signals 23 for the processing unit 40. The sensing elements 21, 22 may be any sensing elements 21, 22 capable of measuring oscillations or vibrations within the fluid container 200. In the illustrated exemplary embodiment, the sensing element 21 is an accelerometer or a laser vibrometer. When the fluid container 200 vibrates or oscillates, the sensing element 21 measures these oscillations and creates a corresponding time series signal (vibration signal 23) for the processing unit 40. Since the oscillations of the fluid container 200 comprise certain frequency components, the vibrations signal 23 follows the frequency pattern of the vibrations. However, other suitable sensing elements may be used, too.

It should be noted that, although shown and described as having one exciting element 10 and one sensing element 21, any other number of exciting elements 10 and sensing elements 21 may be employed, depending on the specific requirements, as long as the exciting elements 10 are arranged to excite the desired suspension mode and the sensing element(s) 21 also measure the suspension mode 25.

The processing unit 40 may be any computing device for processing signals, such as a general-purpose computer having a CPU and memory components, a microcomputer, an FPGA, an ASIC, an TPU or any combination thereof or any other suitable computing device. The processing unit 40 receives the vibrations signal 23 (or vibrations signals 23, if multiple sensing elements 21 are used) from the sensing element 21 as well as the input signal 31 from the signal source 30. By comparing the input signal 31 with each of the at least one vibration signal 23, the processing unit 40 can determine a corresponding transfer function 27 (see Figs. 5 to 8) for each of the sensing elements 21 from which the suspension mode 25 and its current modal frequency 80 can be determined, which, in turn, can be used to determine the current filling level of the fluid container 200. The filling level monitoring device 100, or rather its processing unit 40, can then output a filling level signal 51 or can display the current filling level, if accordingly embodied (i.e., if having display components).

In the configuration of Fig. 1, further an additional end stop 74 is arranged above the fluid container 200 that may also be connected to a surrounding structure. The end stop 74 restricts movement of the fluid container 200 to a maximum amount in case of emergencies such as a crash.

Figs. 2 to 4 show alternative embodiments of the suspension element(s) 70 of Fig. 1. Other functional components, such as the processing unit 40, the signal source 30, the end stop 74, the exciting element 10, the sensing element 21, the sensor 60, and the restriction element 73 are not shown in Figs. 2 to 4 for the sake of clarity. However, each of the embodiments of the suspension element(s) 70 of Figs. 2 to 4 may be implemented in the filling level monitoring system of Fig. 1.

Fig. 2 shows an embodiment, in which two springs 71 are provided as suspension elements 70 which are spaced from each other along a longitudinal direction of the fluid container 200.

Each of the springs 71 is connected to the tank by means of a stiffening metal arch 75 which provides increased mechanical stability to the fuel container 200. Depending on the provision of restriction elements 73 (Fig. 1), suspension modes that are excited by the exciting element(s) 10 (Fig. 1) can be controlled.

Fig. 3 shown another embodiment, in which two metal frames 72 are provided as suspension elements 70. The metal frames 72 comprise an arc-like center portion 76 and foot-like side portions 77. The metal frames 72 are shaped such that they provide a symmetrical holding force from the lateral sides. The metal frames 72 hence support the fuel container 200 laterally, such that substantially no movement to the lateral sides is possible. However, the arch-like shape allows oscillations/vibration in the vertical direction 90 and the longitudinal direction 91 but prevents the movements in the lateral direction. The metal frames 72 do mainly experience bending, resulting in two suspension modes (one along the vertical direction 90 and one along the longitudinal direction 91). By changing the section of the beams of the metal frames 72, the suspension modes can be altered in both frequency and visibility.

Fig. 4 shows another alternative in which two metal frames 72 are provided as the suspension elements 70. The configuration of Fig. 4 deviates from the one of Fig. 3 in that instead of the foot-like side portions 77 of Fig. 3 vertical beams 78 are provided. As will be readily apparent, these vertical beams 78 can bend in each direction and can also be stretched and compressed vertically. Hence, the configuration of Fig. 4 allows oscillations in three translational degrees of freedom, namely in the vertical direction 90, the longitudinal direction 91, and the lateral direction 92. Therefore, the suspension elements 70 of Fig. 4 allow three suspension modes, namely in the vertical direction 90, in the longitudinal direction 91, and in the lateral direction 92. Again, by changing the section of the beams of the metal frames 72, the suspension modes can be altered in both frequency and visibility. The vertical mode can, for example, be emphazised by and the other modes can be reduced by using short, hollow beams. The suspensions in particular of Figs. 3 and 4 can also be reversed (i.e., by hanging the fluid container 200 from a ceiling) to reduce any buckling issues.

With reference to Figs. 1 to 4, in general, the exciting element(s) 10 (e.g., shakers or impact hammers) and the sensing element(s) 21 (e.g., accelerometers) are often unidirectional. Therefore, if a vertical mode is monitored, it may be beneficial to place both the exciting elements 10 and the sensing elements vertically, too, etc. The preferred locations for the exciting elements 10 and the sensing elements 21 are where the modal magnitude of the corresponding suspension mode that is monitored is the largest. Further, some filtration effects may be achieved by combining locations, for example by exciting (and sensing) simultaneously under each suspension element 70. This may lead to the modal peak of the suspension mode becoming much larger and more visible then all other peaks, allowing a very clean peak location estimation.

Fig. 5 shows an exemplary diagram of transfer functions 27. In the following, it is still simultaneously referred to Fig. 1. Each of the lines in Fig. 5 represents an individual transfer function 27 (y-axis) over the frequency (x-axis) in the form of a frequency response function, i.e., for each of the lines of Fig. 5, the following relationship holds:

$$H_i(f) = \frac{V_i(f)}{E(f)}$$

where $H_i(f)$ is the corresponding transfer function 27. These transfer functions 27 indicate the amplification or attenuation of the amplitude of certain frequency components over frequency $f$. $V_i(f)$ is the corresponding measurement signal in the frequency domain (i.e., the vibration signal 23 of the corresponding sensing element 21 in the frequency domain, for example a corresponding FFT of the corresponding vibration signal 23) and $E(f)$ is the input signal (or excitation signal) in the frequency domain (e.g., an FFT of the input signal). The index i refers to the corresponding sensing element 21, i.e., $H_1$(f) is a first transfer function 27 and $V_1$(f) is the vibration signal 23 of a first sensing element 21 in the frequency domain; $H_2$(f) is a second transfer function 27 and $V_2$(f) is a vibration signal 23 of a second sensing element 21 in the frequency domain. Hence, the functions $V(f)$ and $E(f)$ correspond to spectral functions of the vibration signals 23 and the input signal 31, such as those obtained by an FFT or other spectral analysis of the corresponding signals, and the transfer functions 27 indicate how certain frequencies of the vibration signals 23 deviate from the input signal 31 and therefore show their attenuation or amplification. The corresponding FFTs (spectral functions) can then be used to determine the corresponding transfer functions 27, as described above and shown in Fig. 5. Although described as using fast Fourier transforms (FFTs) as spectral analysis procedure for transforming the corresponding time series data into the frequency domain, it should be appreciated that any other spectral analysis algorithm may be used, too.

For determining the diagram of Fig. 5, the exciting element(s) 10 of Fig. 1 are driven by the signal source 30, for example by driving a white noise input signal 31. This input signal 31 introduces vibrations/oscillations within the container/suspension system which in particular also includes the suspension modes. The sensing element(s) 21 then senses vibration signals 23 regarding the vibrations/oscillations within the container/suspension system. Based on these signals 31, 23, the transfer functions 27 of Fig. 5 have been determined as described above. The transfer functions 27 have been determined for three stiffnesses, namely E/100, E/10, and E, where E = 210 GPa is the Young modulus of steel. For each of these stiffnesses, one transfer function 27 has been determined in a fully empty state of the fluid container 200 and one transfer function 27 has been determined in a completely filled state of the fluid container 200.

Fig. 5 shows the transfers functions 27 for a spring-type suspension element 70, such as the one shown in Figs. 1 and 2. In Fig. 5, each of the transfer functions 27 shows a clearly distinguishable maximum peak 29 that corresponds to a suspension mode. The results show that the suspension mode is very visible, its magnitude decreases with increasing stiffness, and the frequency gap (here, 7.1 Hz) between an empty and completely filled fluid container 200 is larger with a higher spring stiffness. Higher stiffnesses of the suspension elements 70 are therefore safer and more effective. The stiffness may, for example, be related to the Young's modulus $E$. Hence, stiffnesses of the suspension elements 70 in the range of 2 GPa to 420 GPa, preferably in the range between 20 GPa to 350 GPa, even more preferably between 40 GPa to 280 GPa, and most preferred between 60 GPa to 220 GPa (expressed in terms of the Young's modulus; as described further above, the stiffness may also be expressed in other ways, for example by means of a displacement caused by a force acting onto the fluid container; the letter $k$ herein generally refers to a measure of the stiffness (which may include the Young's modulus), independently on which representation is used) seem to be particularly preferred, although other stiffnesses are possible, too.

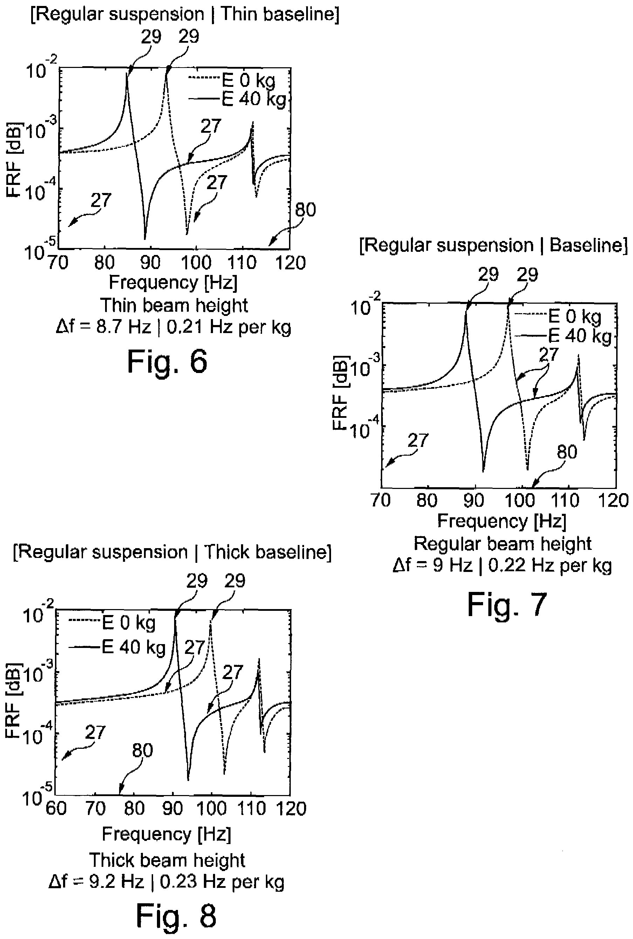

Figs. 6 to 8 show transfer functions 27 obtained with metal frames 72 as suspension elements 70, such as the metal frames 72 of Figs. 3 and 4. The transfer functions again have been determined in an empty state as well as in a completely filled state of the fluid container 200. Fig. 6 shows the transfer functions 27 for relatively thin beams of the metal frames 72, Fig. 7 for thicker beams with regard to Fig. 6, and Fig. 8 for relatively thick beams with regard to both, Fig. 6 and Fig. 7.

Figs. 6 to 8 show that, just as is the case for the spring-like suspension elements 70 of Figs. 1 and 2, that stiffer (thicker) beams of the metal frames 72 behave better (wider gap, smaller displacement). Also, Figs. 6 to 8 clearly show distinct maximum peaks 29 in each of the cases for the observed suspension mode for different filling levels.

In general, with regard to Figs. 1 to 8, the filling level of the fluid container 200 therefore can be determined by using suitable suspension elements, coupling vibrations/oscillations into the container/suspension system, measuring the frequency response of the vibrations/oscillations by means of the sensing element(s) 21, as described above, identifying a maximum peak 29 and determining its modal frequency 80. The filling level may then be determined, for example, by comparing to a reference database, by using machine learning (AI) algorithms, or in any other suitable way. Optionally, a possible influence of temperature, orientation, pressure, etc. can be accounted for by means of the optional sensor 60 of Fig. 1. If more than one sensing element 21 (and/or more than one exciting element 10) is used (in general, one exciting element 10 and one sensing element 21 is enough, however, using multiple exciting elements 10 and or sensing elements 21 can increase accuracy), for example, for each of the pairs of exciting elements 10 and sensing elements 21 individual results (in terms of the modal frequency or the filling level) can be determined and averaged. Such possibilities have been described further above in detail and will not be repeated here.

Further, other vibration modes than the suspension modes can (optionally) also be considered additionally, in order to increase accuracy or to provide redundancy. For example, one sensing element 21 can be mounted to each tip of the fluid container 200. In this arrangement, a horizontal vibration mode, being a vibration mode that corresponds to vibrations that propagate horizontally within the fluid container 200 itself, can additionally be determined, which is also highly suitable for the determination of the filling level. The horizontal vibration mode is a vibration mode, where the tips of the fluid container 200 (or possibly locations of the fluid container 200 that are at opposite sides of the container 200) vibrate in sync. This mode and its frequency also depends on the filling level and can be determined in a similar way as the suspension modes. Here, however, additionally an indicator function $I(f)$ is determined as follows:

$$I(f) = \mathrm{Re}(H_1(f) \cdot \mathrm{conj}(H_2(f))) = \mathrm{Re}(\mathrm{conj}(H_1(f)) \cdot H_2(f)),$$

where, $I(f)$ is the indicator function, $H_1(f)$ is the first transfer function of the sensing element 21 at one tip, $H_2(f)$ is the second transfer function of the sensing element 21 at the opposite tip, conj indicates complex conjugation, and Re indicates taking the real part, parallel vibration components measured by the first sensing element 21 and the second sensing element 22 can be easily extracted. From the resulting indicator function, the current modal frequency of the horizontal vibration mode (and with it the current filling level of the fluid container 200) can also be determined. The horizontal vibration mode is the vibration mode, where the tips of the fluid container vibrate in sync at any time with regard to each other. It also exhibits a high resonance.

Just as the suspension modes, the horizontal vibration mode can be used to individually determine the filling level of the fluid container 200. The result may either be used redundantly or may be incorporated by considering it in an averaging process, as already described with regard to different suspension modes and different sensing elements 21.

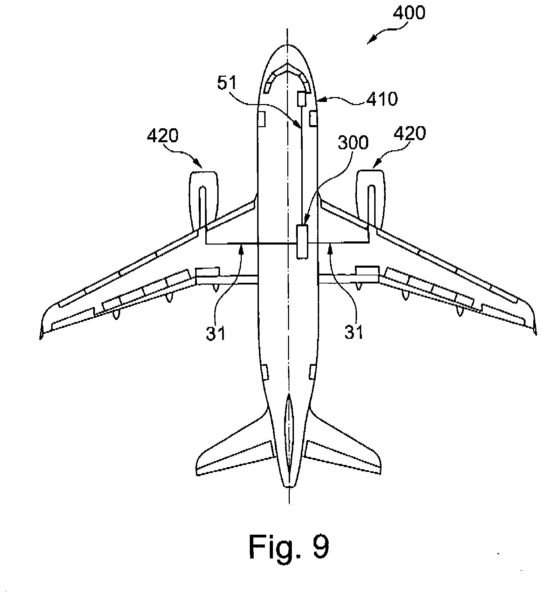

Fig. 9 shows an aircraft 400 having a fuselage 410 and two turbines 420. The aircraft further comprises a liquid hydrogen tank 300, such as the one described above with regard to Fig. 1. The hydrogen tank 300 serves as a fuel source for the turbines 420. The turbines 420 may either directly burn the hydrogen from the hydrogen tank 300 as primary energy source or may, e.g., be an electric turbine using electrical energy created by means of a fuel cell which consumes hydrogen from the hydrogen tank 300.

Vibrations of the turbines 420 can also be directly coupled into the container 200 of the hydrogen tank 300 at the location of the exciting element 10 of Fig. 1. Therefore, the turbines 420 itself acts as exciting elements 10 for the container 200 and couple vibrations into the container 200. However, this is optional. Distinct exciting elements 10, as described herein, can also be used.

Optionally, yaw, pitch and roll sensors of the aircraft 400 itself may be connected to the processing unit 40 and may act as the spatial orientation and acceleration sensor 60 of Fig. 1, which is, however, optional, since using the suspension mode(s) 25 (and the optional additional horizontal vibration mode) for monitoring the filling level 210 is at least largely independent on external influences. The tank is fixed in position within the fuselage 410.

However, by including spatial orientation data of the fluid container 200 into the filling level monitoring device 100, it may be possible to even more accurately monitor the filling level of a hydrogen tank 300 in aircraft applications, in particular under any flight conditions.

It should be noted that "comprising" or "including" does not exclude other elements or steps, and "one" or "a" does not exclude a plurality. It should further be noted that features or steps that have been described with reference to any of the above embodiments may also be used in combination with other features or steps of other embodiments described above. Reference signs in the claims are not to be regarded as limitation.

LIST OF REFERENCE SIGNS

| | |
|---|---|
| 10 | exciting element |
| 21 | sensing element |
| 23 | vibration signal (from sensing element) |
| 25 | suspension mode |
| 27 | transfer function |
| 29 | maximum peak |
| 30 | signal source |
| 31 | input signal |
| 40 | processing unit |
| 51 | filling level signal |
| 60 | spatial orientation and acceleration sensor, temperature and/or pressure sensor |
| 70 | suspension elements, mounts |
| 71 | spring |
| 72 | metal frame |
| 73 | restriction element |
| 74 | end stop |
| 75 | stiffening metal arches |
| 76 | arc-like center portion |
| 77 | foot-like side portions |
| 78 | vertical beams |

80     modal frequency (of suspension mode)
90     vertical direction
91     longitudinal direction
92     lateral direction

100    filling level monitoring device
200    fluid container
221    first tip

300    liquid hydrogen tank

400    aircraft
410    aircraft fuselage, surrounding structure
420    aircraft turbine

**Claims**

1. Filling level monitoring device (100) for monitoring the filling level (210) of a fluid container (200), the filling level monitoring device (100) comprising:

   at least one exciting element (10);
   at least one sensing element (21)
   a signal source (30);
   at least one suspension element (70) having a suspension stiffness; and
   a processing unit (40);
   wherein the at least one exciting element (10) is configured to be mounted to the fluid container (200) and/or the at least one suspension element (70) such that it is operable to excite at least one suspension mode (25) of vibration, wherein the suspension mode (25) is a distinct mode of vibration of the at least one suspension element (70);
   wherein the at least one suspension element (70) is configured to be fixedly connected to the fluid container (200) such that, when excited by the at least one exciting element (10), the fluid container (200) and the at least one suspension element (70) together vibrate in unison;
   wherein the at least one sensing element (21) is configured to be mounted to the fluid container (200) and/or the at least one suspension element (70) and to sense vibrations corresponding to the at least one suspension mode (25);
   wherein the signal source (30) is connected to the at least one exciting element (10) and is configured to generate an input signal (31) comprising a multitude of frequency components;
   wherein each of the at least one sensing element (21) is connected to the processing unit (40) and is configured to sense vibrations within the fluid container (200) and to generate and send a corresponding vibration signal (23) to the processing unit (40); and
   wherein the processing unit (40) is configured:

   to identify the at least one suspension mode (25) from the vibration signals (23) of the at least one sensing element (21) and the input signal (31),
   to determine a modal frequency (80) of the at least one suspension mode (25); and
   to determine a current filling level (210) of the fluid container (200) based on the modal frequency of the at least one suspension mode (25).

2. Filling level monitoring device (100) of claim 1, wherein the processing unit (40) is further configured to identify the at least one suspension mode (25) and to determine the modal frequency (80) of the at least one suspension mode (25) by determining a transfer function (27) in the frequency domain for the vibration signals (23) of each of the at least one sensing element (21) by:

   normalizing and transforming each of the vibration signals (23) of the at least one sensing element (21) and the input signal (31) to a frequency domain representation using Fast Fourier Transforms, FFTs; and
   comparing the FFT of each of the vibration signals (23) of the at least one sensing element (21) with the FFT of the input signal (31) to determine the corresponding transfer function (27).

3. The filling level monitoring device (100) of any one of the preceding claims, wherein the processing unit (40) is configured to determine the at least one suspension mode (25) independently for each of the at least one sensing element (21) by determining a frequency of a corresponding maximum peak (29) of the corresponding transfer function (27).

4. The filling level monitoring device (100) of any one of the preceding claims, wherein the processing unit (40) is configured to determine the current filling level (210) of the fluid container (200) by correlating the modal frequency (80) of each of the determined suspension modes (25) with reference suspension mode frequencies corresponding to specific filling levels (210).

5. The filling level monitoring device (100) of claim 4, wherein the processing unit (40) is configured to determine the current filling level (210) by averaging current filling levels (210) determined independently for individual ones of the sensing elements (21).

6. The filling level monitoring device (100) of any one of the preceding claims, wherein the at least one exciting element (10) is configured to be co-located with at least one of the sensing elements (21).

7. Filling level monitoring device (100) of claim any one of the preceding claims, wherein the at least one suspension element (70) is made from a metallic material; and/or
wherein the suspension stiffness of the at least one suspension element (70), expressed in terms of a Young's modulus, is in the range between 2 GPa to 420 GPa.

8. Filling level monitoring device (100) of any one of the preceding claims, wherein the at least one suspension mode (25) comprises at least one of the following modes associated with corresponding degrees of freedom:

   a translational vibration mode; and
   a rotational vibration mode.

9. Filling level monitoring device (100) of any one of the preceding claims, wherein the at least one suspension element (70) is configured to connect the fluid container (200) to a surrounding structure (410).

10. Filling level monitoring device (100) of any one of the preceding claims, wherein the at least one suspension element (70) is a spring (71); and/or
wherein the filling level monitoring device (100) further comprises a restriction element (73) that restricts vibrational movement of the fluid container (200) and the at least one suspension element (70) to specified degrees of freedom.

11. Filling level monitoring device (100) of any one of the preceding claims, wherein the at least one suspension element (70) is a metal frame (72) that can vibrate in at least one of a vertical direction, a longitudinal direction, and a lateral direction.

12. Filling level monitoring device (100), wherein the at least one exciting element (10) is arranged at and in contact with the at least one suspension element (70) and is configured to couple vibrational loads corresponding to the input signal (31) from the signal source (30) into the at least one suspension element (70) and the fluid container (200).

13. Filling level monitoring device (100) of any one of the preceding claims, further comprising at least one end stop (74) to limit motion of the fluid container (200).

14. Hydrogen tank (300), comprising:

   a fluid container (200) for holding liquified hydrogen; and
   a filling level monitoring device (100) according to any one of the preceding claims.

15. Aircraft (400), comprising:

   an aircraft fuselage (410); and
   a hydrogen tank (300) according to claim 14;
   wherein the filling level monitoring device (100) is configured to monitor the hydrogen filling level (210) of the fluid container (200).

**Amended claims in accordance with Rule 137(2) EPC.**

1. Filling level monitoring device (100) for monitoring the filling level (210) of a fluid container (200), the filling level monitoring device (100) comprising:

    at least one exciting element (10);
    at least one sensing element (21);
    a signal source (30);
    at least one suspension element (70) having a suspension stiffness; and
    a processing unit (40);
    wherein the at least one exciting element (10) is configured to be mounted to the fluid container (200) and/or the at least one suspension element (70) such that it is operable to excite at least one suspension mode (25) of vibration, wherein the suspension mode (25) is a distinct mode of vibration of the at least one suspension element (70);
    wherein the at least one suspension element (70) is configured to be fixedly connected to the fluid container (200) such that, when excited by the at least one exciting element (10), the fluid container (200) and the at least one suspension element (70) together vibrate in unison;
    wherein the at least one suspension element (70) is configured to connect the fluid container (200) to a surrounding structure (410);
    wherein the at least one sensing element (21) is configured to be mounted to the fluid container (200) and/or the at least one suspension element (70) and to sense vibrations corresponding to the at least one suspension mode (25);
    wherein the signal source (30) is connected to the at least one exciting element (10) and is configured to generate an input signal (31) comprising a multitude of frequency components;
    wherein each of the at least one sensing element (21) is connected to the processing unit (40) and is configured to sense vibrations within the fluid container (200) and to generate and send a corresponding vibration signal (23) to the processing unit (40); and
    wherein the processing unit (40) is configured:

       to identify the at least one suspension mode (25) from the vibration signals (23) of the at least one sensing element (21) and the input signal (31);
       to determine a modal frequency (80) of the at least one suspension mode (25); and
       to determine a current filling level (210) of the fluid container (200) based on the modal frequency of the at least one suspension mode (25).

2. Filling level monitoring device (100) of claim 1, wherein the processing unit (40) is further configured to identify the at least one suspension mode (25) and to determine the modal frequency (80) of the at least one suspension mode (25) by determining a transfer function (27) in the frequency domain for the vibration signals (23) of each of the at least one sensing element (21) by:

    normalizing and transforming each of the vibration signals (23) of the at least one sensing element (21) and the input signal (31) to a frequency domain representation using Fast Fourier Transforms, FFTs; and
    comparing the FFT of each of the vibration signals (23) of the at least one sensing element (21) with the FFT of the input signal (31) to determine the corresponding transfer function (27).

3. The filling level monitoring device (100) of claim 2, wherein the processing unit (40) is configured to determine the at least one suspension mode (25) independently for each of the at least one sensing element (21) by determining a frequency of a corresponding maximum peak (29) of the corresponding transfer function (27).

4. The filling level monitoring device (100) of any one of the preceding claims, wherein the processing unit (40) is configured to determine the current filling level (210) of the fluid container (200) by correlating the modal frequency (80) of each of the determined suspension modes (25) with reference suspension mode frequencies corresponding to specific filling levels (210).

5. The filling level monitoring device (100) of claim 4, wherein the processing unit (40) is configured to determine the current filling level (210) by averaging current filling levels (210) determined independently for individual ones of the sensing elements (21).

6. The filling level monitoring device (100) of any one of the preceding claims, wherein the at least one exciting element (10) is configured to be co-located with at least one of the sensing elements (21).

7. Filling level monitoring device (100) of any one of the preceding claims, wherein the at least one suspension element (70) is made from a metallic material; and/or
wherein the suspension stiffness of the at least one suspension element (70), expressed in terms of a Young's modulus, is in the range between 2 GPa to 420 GPa.

8. Filling level monitoring device (100) of any one of the preceding claims, wherein the at least one suspension mode (25) comprises at least one of the following modes associated with corresponding degrees of freedom:

   a translational vibration mode; and
   a rotational vibration mode.

9. Filling level monitoring device (100) of any one of the preceding claims, wherein the at least one suspension element (70) is a spring (71); and/or
wherein the filling level monitoring device (100) further comprises a restriction element (73) that restricts vibrational movement of the fluid container (200) and the at least one suspension element (70) to specified degrees of freedom.

10. Filling level monitoring device (100) of any one of the preceding claims, wherein the at least one suspension element (70) is a metal frame (72) that can vibrate in at least one of a vertical direction, a longitudinal direction, and a lateral direction.

11. Filling level monitoring device (100) of any one of the preceding claims, wherein the at least one exciting element (10) is arranged at and in contact with the at least one suspension element (70) and is configured to couple vibrational loads corresponding to the input signal (31) from the signal source (30) into the at least one suspension element (70) and the fluid container (200).

12. Filling level monitoring device (100) of any one of the preceding claims, further comprising at least one end stop (74) to limit motion of the fluid container (200).

13. Hydrogen tank (300), comprising:

   a fluid container (200) for holding liquified hydrogen; and
   a filling level monitoring device (100) according to any one of the preceding claims.

14. Aircraft (400), comprising:

   an aircraft fuselage (410); and
   a hydrogen tank (300) according to claim 13;
   wherein the filling level monitoring device (100) is configured to monitor the hydrogen filling level (210) of the fluid container (200).

Fig. 1

**Fig. 2**

**Fig. 3**

Fig. 4

Fig. 5

[Regular suspension | Thin baseline]

Thin beam height
Δf = 8.7 Hz | 0.21 Hz per kg

Fig. 6

[Regular suspension | Baseline]

Regular beam height
Δf = 9 Hz | 0.22 Hz per kg

Fig. 7

[Regular suspension | Thick baseline]

Thick beam height
Δf = 9.2 Hz | 0.23 Hz per kg

Fig. 8

Fig. 9

Europäisches
Patentamt
European
Patent Office
Office européen
des brevets

## EUROPEAN SEARCH REPORT

**Application Number**

EP 24 29 0040

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | DE 197 18 526 C1 (LANGE KNUT DIPL ING [DE]) 15 October 1998 (1998-10-15) | 1,4-11, 13 | INV. G01F23/296 G01F23/80 |
| Y | * column 2, line 2 - column 4, line 6; figures 1-4 * | 14,15 | |
| | ----- | | ADD. |
| X | KR 101 732 151 B1 (KOREA ADVANCED INST SCI & TECH [KR]) 2 May 2017 (2017-05-02) | 1-6,8-13 | B64D37/02 B64D37/30 |
| Y | * paragraphs [0001] - [0064]; figures 1-5 * | 14,15 | |
| | ----- | | |
| X | US 2022/143644 A1 (FOUBERT GUILLAUME [FR] ET AL) 12 May 2022 (2022-05-12) | 1,4,6-13 | |
| Y | * paragraphs [0040] - [0153]; figures 1-4 * | 14,15 | |
| | ----- | | |
| X | US 2008/104969 A1 (HEISE AXEL [DE] ET AL) 8 May 2008 (2008-05-08) * paragraphs [0015] - [0025]; figures 1-5 * | 1,14,15 | |
| | ----- | | TECHNICAL FIELDS SEARCHED (IPC) |
| Y,D | WO 2023/217807 A1 (AIRBUS SAS [FR]; AIRBUS OPERATIONS GMBH [DE]; CARTHAGE COLLEGE [US]) 16 November 2023 (2023-11-16) * page 21, line 14 - page 28, line 21; figures 1-3 * | 14,15 | G01F B64D |
| | ----- | | |
| A | DE 10 2016 206770 A1 (VOLKSWAGEN AG [DE]) 26 October 2017 (2017-10-26) * paragraphs [0014] - [0032]; figures 1-3 * | 1-15 | |
| | ----- | | |

The present search report has been drawn up for all claims

| Place of search | Date of completion of the search | Examiner |
|---|---|---|
| The Hague | 7 April 2025 | Myrillas, K |

CATEGORY OF CITED DOCUMENTS

X : particularly relevant if taken alone
Y : particularly relevant if combined with another
document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P4C01)

## ANNEX TO THE EUROPEAN SEARCH REPORT
## ON EUROPEAN PATENT APPLICATION NO.

EP 24 29 0040

This annex lists the patent family members relating to the patent documents cited in the above-mentioned European search report.
The members are as contained in the European Patent Office EDP file on
The European Patent Office is in no way liable for these particulars which are merely given for the purpose of information.

07-04-2025

| Patent document cited in search report | | Publication date | Patent family member(s) | | Publication date |
|---|---|---|---|---|---|
| DE 19718526 | C1 | 15-10-1998 | NONE | | |
| KR 101732151 | B1 | 02-05-2017 | NONE | | |
| US 2022143644 | A1 | 12-05-2022 | CN | 113614495 A | 05-11-2021 |
| | | | EP | 3956640 A1 | 23-02-2022 |
| | | | ES | 2974201 T3 | 26-06-2024 |
| | | | FR | 3095137 A1 | 23-10-2020 |
| | | | JP | 7606978 B2 | 26-12-2024 |
| | | | JP | 2022528993 A | 16-06-2022 |
| | | | KR | 20210153624 A | 17-12-2021 |
| | | | US | 2022143644 A1 | 12-05-2022 |
| | | | WO | 2020212548 A1 | 22-10-2020 |
| US 2008104969 | A1 | 08-05-2008 | DE | 102007052635 A1 | 21-08-2008 |
| | | | US | 2008104969 A1 | 08-05-2008 |
| WO 2023217807 | A1 | 16-11-2023 | CN | 119032258 A | 26-11-2024 |
| | | | EP | 4522949 A1 | 19-03-2025 |
| | | | KR | 20250016100 A | 03-02-2025 |
| | | | US | 2023366720 A1 | 16-11-2023 |
| | | | WO | 2023217807 A1 | 16-11-2023 |
| DE 102016206770 A1 | | 26-10-2017 | NONE | | |

EPO FORM P0459

For more details about this annex : see Official Journal of the European Patent Office, No. 12/82

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- WO 2023217807 A1